# EUROPEAN PATENT APPLICATION

(11) **EP 3 536 544 A1**
(43) Date of publication of application: **11.09.2019**
(21) Application number: 19153975.8
(22) Date of filing: 28.01.2019
(51) Int. Cl.: B60L 53/65, H01M 10/42

(54) **VERIFICATION METHOD AND SYSTEM FOR BATTERY POWER SUPPLY**

(30) Priority: 09.03.2018 TW 10708140
(71) Applicant: Kwang Yang Motor Co., Ltd., Kaohsiung City 80794 (TW)
(72) Inventor: Wang, Liang-Chi, 81460 Kaohsiung (TW); Cheng, Jen-Chieh, 80794 Kaohsiung City (TW); Lin, Jen-Chiun, 11501 Tapei City (TW); Chuang, Po-Yu, 11501 Taipei City (TW); Chen, Yuh-Rey, 11501 Taipei City (TW); Liu, Te-Chuan, 11501 Taipei City (TW)
(74) Representative: Zimmermann, Tankred Klaus

(57) **Abstract**

A verification method for battery power supply is to be implemented by a carrier device (1) corresponding to a unique carrier identifier and communicable with a power supply device (2) that stores a reference carrier identifier which corresponds to a carrier device. The verification method is characterized by: by a carrier microcontroller (13) of the carrier device (1), determining whether or not verification of the power supply device (2) succeeded based on a verification result associated with the unique carrier identifier of the carrier device and the reference carrier identifier stored in the power supply device (2); and by the carrier microcontroller (13), controlling the carrier device (1) to utilize electrical energy provided by the power supply device (2) to operate when it is determined that the verification of the power supply device (20) succeeded.

## Description

The disclosure relates to a verification method and a verification system, and more particularly to a verification method for battery power supply and a verification system for battery power supply.

For a conventional electric vehicle (EV) lacking a mechanism to prevent theft of a battery thereof, the battery once stolen may be used on another EV. In addition, a counterfeit battery may be unknowingly used on an EV, causing concerns over driving safety of the EV.

Therefore, an object of the disclosure is to provide a verification method for battery power supply and a verification system for battery power supply that can alleviate at least one of the drawbacks of the prior art.

According to one aspect of the disclosure, the verification method is to be implemented by a carrier device that corresponds to a unique carrier identifier, that includes a carrier microcontroller, and that is communicable with a power supply device. The power supply device stores at least one reference carrier identifier which corresponds to at least one carrier device. The verification method includes:
(A) by the carrier microcontroller, determining whether or not verification of the power supply device succeeded based on a verification result associated with the unique carrier identifier of the carrier device and said at least one reference carrier identifier stored in the power supply device; and
(B) by the carrier microcontroller, controlling the carrier device to utilize electrical energy provided by the power supply device to operate when it is determined that the verification of the power supply device succeeded.

According to another aspect of the disclosure, the verification system includes a carrier device and a power supply device. The carrier device corresponds to a unique carrier identifier and includes a carrier microcontroller. The power supply device is communicable with the carrier device, and includes a battery that is configured to provide electrical energy, storage medium that is configured to store at least one reference carrier identifier which corresponds to at least one carrier device, and a battery microcontroller that is electrically connected to the battery and the storage medium. The carrier microcontroller is configured to determine whether or not verification of the power supply device succeeded based on a verification result associated with the unique carrier identifier of the carrier device and said at least one reference carrier identifier stored in the storage medium of the power supply device, and to control the carrier device to utilize the electrical energy provided by the battery of the power supply device to operate when it is determined that the verification of the power supply device succeeded.

Other features and advantages of the disclosure will become apparent in the following detailed description of the embodiments with reference to the accompanying drawings, of which:
Figure 1 is a block diagram illustrating a first embodiment of a verification system for battery power supply according to the disclosure;
Figure 2 is a flow chart illustrating a first embodiment of a verification method for battery power supply according to the disclosure;
Figure 3 is a flow chart illustrating sub-steps of determining whether or not verification of a power supply device succeeded in the first embodiment of the verification method according to the disclosure;
Figure 4 is a block diagram illustrating a second embodiment of the verification system for battery power supply according to the disclosure;
Figure 5 is a flow chart illustrating a second embodiment of the verification method for battery power supply according to the disclosure; and
Figure 6 is a flow chart illustrating sub-steps of determining whether or not verification of the power supply device succeeded in the second embodiment of the verification method according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

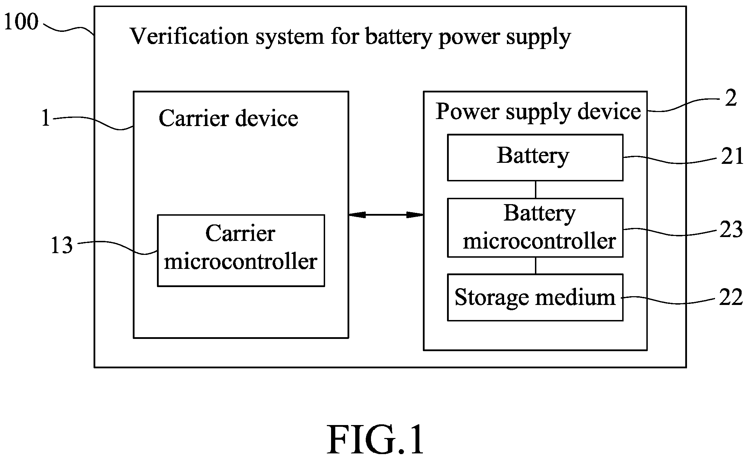

Referring to Figure 1, a first embodiment of a verification system 100 for battery power supply according to the disclosure is illustrated. The verification system 100 includes a carrier device 1 and a power supply device 2.

The carrier device 1 corresponds to a unique carrier identifier and includes a carrier microcontroller 13. In this embodiment, the carrier device 1 is implemented to be a car or a motorcycle, but implementation of the carrier device 1 is not limited to the disclosure herein and may vary in other embodiments. In this embodiment, the carrier microcontroller 13 is implemented to be a vehicle control unit (VCU), but implementation of the carrier microcontroller 13 is not limited to the disclosure herein and may vary in other embodiments.

The power supply device 2 and the carrier device 1 are communicable with each other via a Controller Area Network (CAN, also known as CAN bus) . The power supply device 2 includes a battery 21, storage medium 22 and a battery microcontroller 23.

The battery 21 is configured to provide electrical energy. The storage medium 22 is configured to store at least one reference carrier identifier which corresponds to at least one carrier device. The at least one carrier device corresponding to the at least one reference carrier identifier may be carrier device (s) that the battery 21 is authorized to be used on for provision of electrical energy (at least in the aspects of performing functions related to driving, e.g., motor actions. The battery microcontroller 23 is electrically connected to the battery 21 and the storage medium 22. In this embodiment, the storage medium 22 and the battery microcontroller 23 are cooperatively implemented to be a battery management system (BMS), but implementation thereof is not limited to the disclosure herein and may vary in other embodiments.

The carrier microcontroller 13 is configured to determine whether or not verification of the power supply device 2 succeeded based on a verification result associated with the unique carrier identifier of the carrier device 1 and said at least one reference carrier identifier stored in the power supply device 2. The carrier microcontroller 13 is configured to control the carrier device 1 to utilize the electrical energy provided by the battery 21 of the power supply device 2 to operate when it is determined that the verification of the power supply device 2 succeeded. Specifically speaking, the carrier microcontroller 13 is configured to transmit the unique carrier identifier to the power supply device 2 so as to enable the power supply device 2 to determine whether the unique carrier identifier matches one of said at least one reference carrier identifier, to generate the verification result, and to transmit the verification result to the carrier device 1. The carrier microcontroller 13 then determines whether the verification of the power supply device 2 succeeded based on the verification result thus received. The carrier microcontroller 13 determines that the verification of the power supply device 2 succeeded when the verification result indicates that the unique carrier identifier matches one of said at least one reference carrier identifier or that the verification succeeded, and determines that the verification of the power supply device did not succeed when the verification result indicates that the unique carrier identifier does not match any of said at least one reference carrier identifier or that the verification failed. The carrier microcontroller 13 is configured to transmit a power supply instruction to the power supply device 2 so as to enable the battery microcontroller 23 of the power supply device 2 to control the battery 21 to supply the electrical energy to the carrier device 1 when it is determined that the verification of the power supply device 2 succeeded.

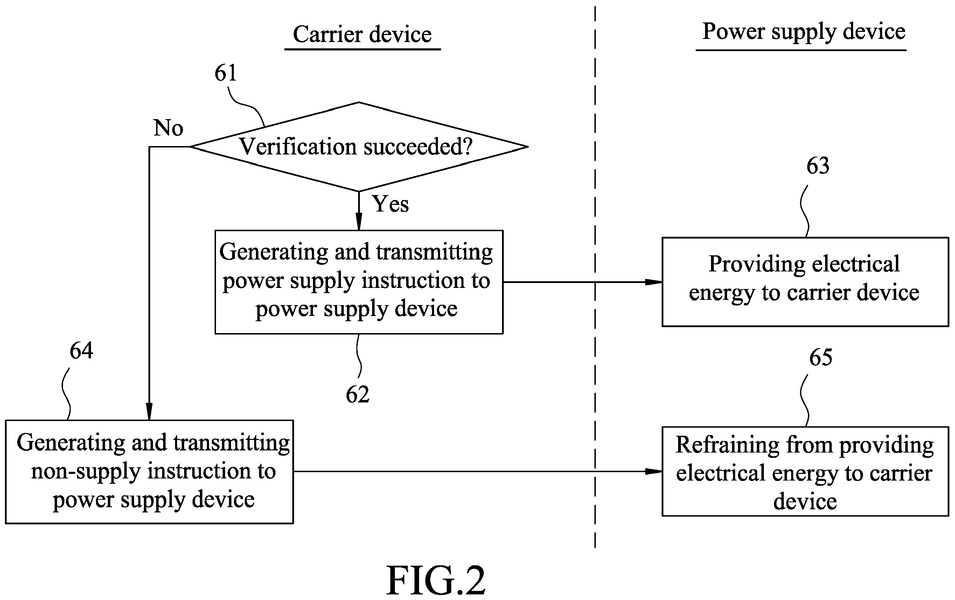

Referring to Figure 2, a first embodiment of a verification method for battery power supply according to the disclosure is illustrated. The first embodiment of the verification method is to be implemented by the first embodiment of the verification system 100 that is previously described. The verification method includes steps 61 to 65 described as follows.

In step 61, the carrier microcontroller 13 determines whether or not verification of the power supply device 2 succeeded based on a verification result associated with the unique carrier identifier of the carrier device 1 and said at least one reference carrier identifier stored in the power supply device 2. The flow of procedure proceeds to step 62 when the carrier microcontroller 13 determines that the verification of the power supply device 2 succeeded; otherwise, the flow of procedure proceeds to step 64.

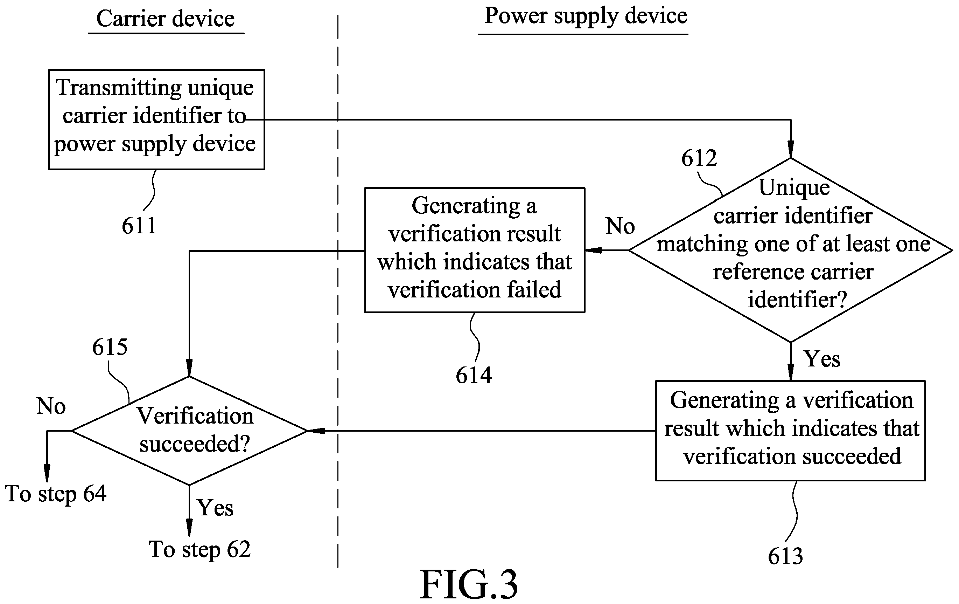

Referring to Figure 3, step 61 includes the following sub-steps 611 to 615.

In sub-step 611, the carrier microcontroller 13 transmits the unique carrier identifier of the carrier device 1 to the power supply device 2.

In sub-step 612, the battery microcontroller 23 of the power supply device 2 determines whether the unique carrier identifier matches one of said at least one reference carrier identifier stored in the storage medium 22 of the power supply device 2. When it is determined by the battery microcontroller 23 that the unique carrier identifier of the carrier device 1 matches one of said at least one reference carrier identifier stored in the storage medium 22 of the power supply device 2, a flow of procedure proceeds to sub-step 613. Otherwise, when it is determined by the battery microcontroller 23 that the unique carrier identifier does not match any of said at least one reference carrier identifier stored in the storage medium 22 of the power supply device 2, the flow of procedure proceeds to sub-step 614.

In sub-step 613, the battery microcontroller 23 generates the verification result which indicates that the verification of the power supply device 2 succeeded, and transmits the verification result to the carrier device 1. Then, the flow of procedure proceeds to sub-step 615.

In sub-step 614, the battery microcontroller 23 generates the verification result which indicates that the verification of the power supply device 2 failed, and transmits the verification result to the carrier device 1. Then, the flow of procedure proceeds to sub-step 615.

In sub-step 615, the carrier microcontroller 13 determines whether or not the verification of the power supply device 2 succeeded based on the verification result. The carrier microcontroller 13 determines that the verification of the power supply device 2 succeeded when the verification result indicates that the verification of the power supply device 2 succeeded, and then the flow of procedure proceeds to step 62. On the other hand, the carrier microcontroller 13 determines that the verification of the power supply device 2 did not succeed, i.e., failed, when the verification result indicates that the verification of the power supply device 2 failed, and then the flow of procedure proceeds to step 64.

In step 62, the carrier microcontroller 13 generates a power supply instruction and transmits the power supply instruction to the power supply device 2 so as to enable the power supply device 2 to supply the electrical energy to the carrier device 1. In step 63, after receiving the power supply instruction, the battery microcontroller 23 controls the battery 21 to provide the electrical energy to the carrier device 1. Accordingly, the carrier microcontroller 13 controls the carrier device 1 to utilize the electrical energy provided by the power supply device 2 to operate.

In step 64, the carrier microcontroller 13 generates and transmits a non-supply instruction to the power supply device 2 so as to prevent the power supply device 2 from supplying the electrical energy to the carrier device 1.

In step 65, after receiving the non-supply instruction, the battery microcontroller 23 refrains from supplying the electrical energy provided by the battery 21 to the carrier device 1.

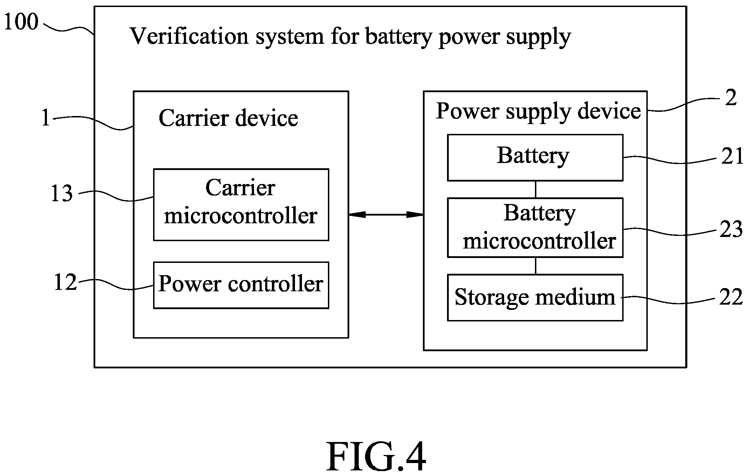

Referring to Figure 4, a second embodiment of the verification system 100 for battery power supply according to the disclosure is illustrated. The second embodiment is similar to the first embodiment, but is different from the first embodiment in what will be described below.

The carrier device 1 of the second embodiment further includes a power controller 12 that is electrically connected to the carrier microcontroller 13.

The carrier microcontroller 13 is configured to transmit a request for data associated with said at least one reference carrier identifier to the power supply device 2 so as to enable the power supply device 2 to transmit said at least one reference carrier identifier stored in the storage medium 22 to the carrier device 1. The carrier microcontroller 13 is configured to, after receiving said at least one reference carrier identifier from the power supply device 2, determine whether the unique carrier identifier of the carrier device 1 matches one of said at least one reference carrier identifier, so as to generate the verification result. The carrier microcontroller 13 is configured to, when it is determined that verification of the power supply device 2 succeeded, control the power controller 12 to establish an electrical connection for transmitting electrical energy between the carrier device 1 and the power supply device 2 so as to enable the battery microcontroller 23 to control the battery 21 to provide the electrical energy to the carrier device 1 via the electrical connection between the carrier device 1 and the power supply device 2.

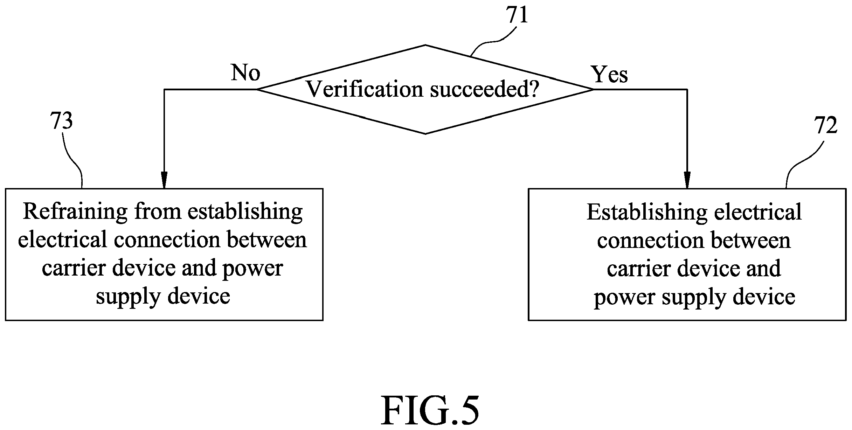

Referring to Figure 5, a second embodiment of the verification method for battery power supply according to the disclosure is illustrated. The second embodiment of the verification method is to be implemented by the second embodiment of the verification system 100 that is previously described, and includes steps 71 to 73 described as follows.

In step 71, the carrier microcontroller 13 determines whether or not verification of the power supply device 2 succeeded based on a verification result associated with the unique carrier identifier of the carrier device 1 and said at least one reference carrier identifier stored in the power supply device 2. The flow of procedure proceeds to step 72 when the carrier microcontroller 13 determines that the verification of the power supply device 2 succeeded; otherwise, the flow of procedure proceeds to step 72.

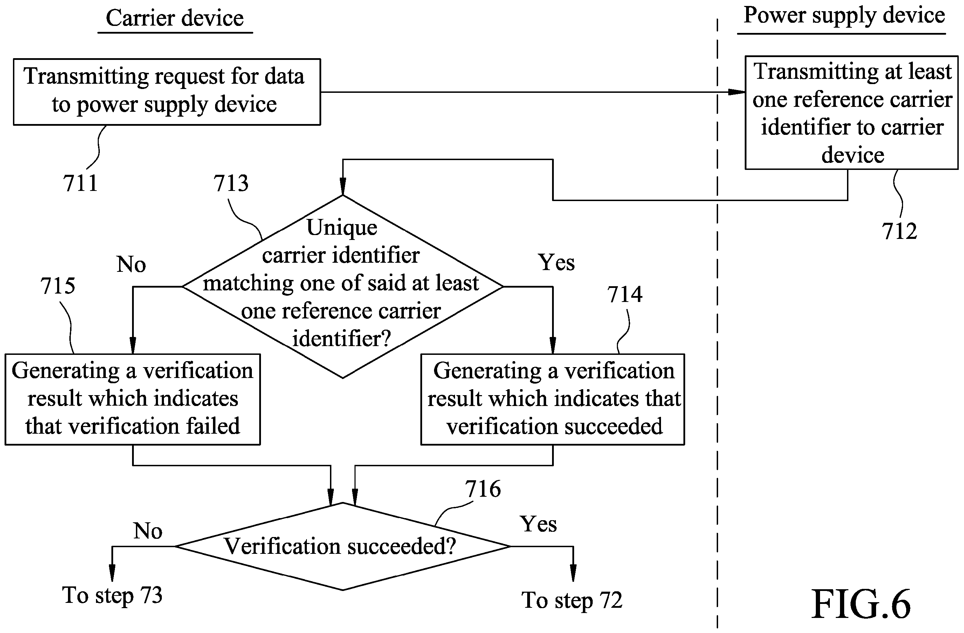

Referring to Figure 6, step 71 includes the following sub-steps 711 to 714.

In sub-step 711, the carrier microcontroller 13 transmits a request for data associated with said at least one reference carrier identifier to the power supply device 2.

In sub-step 712, after receiving the request for data, the power supply device 2 transmits said at least one reference carrier identifier stored in the storage medium 22 of the power supply device 2 to the carrier device 1.

In sub-step 713, after receiving said at least one reference carrier identifier from the power supply device 2, the carrier microcontroller 13 determines whether the unique carrier identifier of the carrier device 1 matches one of said at least one reference carrier identifier so as to generate the verification result. When it is determined by the carrier microcontroller 13 that the unique carrier identifier matches one of said at least one reference carrier identifier, a flow of procedure proceeds to sub-step 714. Otherwise, when it is determined by the carrier microcontroller 13 that the unique carrier identifier does not match any of said at least one reference carrier identifier, the flow of procedure proceeds to sub-step 715.

In sub-step 714, the carrier microcontroller 13 generates the verification result which indicates that the verification of the power supply device 2 succeeded, and then the flow of procedure proceeds to sub-step 716.

In sub-step 715, the carrier microcontroller 13 generates the verification result which indicates that the verification of the power supply device 2 failed, and then the flow of procedure proceeds to sub-step 716.

In sub-step 716, the carrier microcontroller 13 determines whether or not the verification of the power supply device 2 succeeded based on the verification result. The carrier microcontroller 13 determines that the verification of the power supply device 2 succeeded when the verification result indicates that the verification of the power supply device 2 succeeded, and then the flow of procedure proceeds to step 72. On the other hand, the carrier microcontroller 13 determines that the verification of the power supply device 2 did not succeed, i.e., failed, when the verification result indicates that the verification of the power supply device 2 failed, and then the flow of procedure proceeds to step 73.

In step 72, the carrier microcontroller 13 controls the power controller 12 to establish the electrical connection between the carrier device 1 and the power supply device 2 so as to enable the battery microcontroller 23 to provide the electrical energy of the battery 21 to the carrier device 1 via the electrical connection thus established.

In step 73, the carrier microcontroller 13 controls the power controller 12 to refrain from establishing the electrical connection between the carrier device 1 and the power supply device 2 so as to prevent the battery microprocessor 23 from providing the electrical energy of the battery 22 to the carrier device 1 via the electrical connection thus established.

It should be noted that in a variant embodiment of step 73, the carrier microcontroller 13 controls the power controller 12 to allow the carrier device 1 to utilize the electrical energy provided by the power supply device 2, but the electrical energy is only distributed to components performing functions other than motor actions, such as to display. In this way, a user of the carrier device 1 is able to read information displayed by the carrier device 1, but unable to drive the carrier device 1.

In summary, the verification method according to the disclosure utilizes a carrier device to determine whether or not verification of the power supply device succeeded based on a verification result associated with a unique carrier identifier of the carrier device and at least one reference carrier identifier stored in a power supply device, and to control the carrier device to utilize electrical energy provided by the power supply device to operate when it is determined that the verification of the power supply device succeeded. Consequently, only an authentic battery obtained from a legitimate source can be used on the carrier device, reducing risk of battery theft and promoting driving safety.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A verification method for battery power supply, to be implemented by a carrier device (1) that corresponds to a unique carrier identifier, that includes a carrier microcontroller (13), and that is communicable with a power supply device (2), the power supply device (2) storing at least one reference carrier identifier which corresponds to at least one carrier device, the verification method **characterized by**:
(A) by the carrier microcontroller (13), determining whether or not verification of the power supply device (2) succeeded based on a verification result associated with the unique carrier identifier of the carrier device and said at least one reference carrier identifier stored in the power supply device (2); and
(B) by the carrier microcontroller (13), controlling the carrier device (1) to utilize electrical energy provided by the power supply device (2) to operate when it is determined that the verification of the power supply device (20) succeeded.

2. The verification method as claimed in claim 1, **characterized in that** step (A) includes sub-steps of:
(A-1) by the carrier microcontroller (13), transmitting the unique carrier identifier to the power supply device (2) so as to enable the power supply device (2) to generate the verification result by determining whether the unique carrier identifier matches one of said at least one reference carrier identifier, and to transmit the verification result to the carrier device (1); and
(A-2) by the carrier microcontroller (13), determining whether the verification of the power supply device (2) succeeded based on the verification result.

3. The verification method as claimed in of claim 1, **characterized in that** step (A) includes sub-steps of:
(A-1) by the carrier microcontroller (13), transmitting a request for data associated with said at least one reference carrier identifier to the power supply device (2) so as to enable the power supply device (2) to transmit said at least one reference carrier identifier stored in the power supply device (2) to the carrier device (1); and
(A-2) by the carrier microcontroller (13) after receiving said at least one reference carrier identifier from the power supply device (2), determining whether the unique carrier identifier of the carrier device (1) matches one of said at least one reference carrier identifier, so as to generate the verification result.

4. The verification method as claimed in claim 1, **characterized in that** step (B) includes:
by the carrier microcontroller (13), transmitting a power supply instruction to the power supply device (2) so as to enable the power supply device (2) to supply the electrical energy to the carrier device (1) when it is determined that the verification of the power supply device (2) succeeded.

5. The verification method as claimed in claim 1, the carrier device (1) further including a power controller (12) that is electrically connected to the carrier microcontroller (13), the verification method **characterized in that** step (B) includes:
by the carrier microcontroller (13) when it is determined that verification of the power supply device (2) succeeded, controlling the power controller (12) to establish an electrical connection for transmitting electrical energy between the carrier device (1) and the power supply device (2) so as to enable the power supply device (2) to provide the electrical energy to the carrier device (1) via the electrical connection thus established.

6. A system (100) for battery power supply, said system (100) **characterized by**:
a carrier device (1) corresponding to a unique carrier identifier and including a carrier microcontroller (13); and
a power supply device (2) communicable with said carrier device (1), and including
a battery (21) that is configured to provide electrical energy,
storage medium (22) that is configured to store at least one reference carrier identifier which corresponds to at least one carrier device, and
a battery microcontroller (23) that is electrically connected to said battery (21) and said storage medium (22),
wherein said carrier microcontroller (13) is configured to determine whether or not verification of said power supply device (2) succeeded based on a verification result associated with the unique carrier identifier of said carrier device and said at least one reference carrier identifier stored in said storage medium (22) of said power supply device (2), and to control said carrier device (1) to utilize the electrical energy provided by said battery (21) of saidpower supply device (2) to operate when it is determined that the verification of said power supply device (20) succeeded.

7. The system (100) as claimed in claim 6, **characterized in that** said carrier microcontroller (13) is configured to transmit the unique carrier identifier to said power supply device (2) so as to enable said power supply device (2) to generate the verification result by determining whether the unique carrier identifier matches one of said at least one reference carrier identifier, and to transmit the verification result to said carrier device (1) .

8. The system (100) as claimed in claim 6, **characterized in that**:
said carrier microcontroller (13) is configured to transmit a request for data associated with said at least one reference carrier identifier to said power supply device (2) so as to enable said power supply device (2) to transmit said at least one reference carrier identifier stored in said storage medium (22) to said carrier device (1); and
said carrier microcontroller (13) is configured to, after receiving said at least one reference carrier identifier from said power supply device (2), determine whether the unique carrier identifier of said carrier device (1) matches one of said at least one reference carrier identifier, so as to generate the verification result.

9. The system (100) as claimed in claim 6, **characterized in that** said carrier microcontroller (13) is configured to transmit a power supply instruction to said power supply device (2) so as to enable said battery microcontroller (23) of said power supply device (2) to control said battery (21) to supply the electrical energy to said carrier device (1) when it is determined that the verification result succeeded.

10. The system (100) as claimed in claim 6, **characterized in that**:
said carrier device (1) further includes a power controller (12) that is electrically connected to said carrier microcontroller (13); and
said carrier microcontroller (13) is configured to, when it is determined that verification of said power supply device (2) succeeded, control said power controller (12) to establish an electrical connection between said carrier device (1) and said power supply device (2) so as to enable said battery microcontroller (23) to control said battery (21) to provide the electrical energy to said carrier device (1) via the electrical connection between said carrier device (1) and said power supply device (2).
